# DEMANDE DE BREVET EUROPEEN

(11) **EP 1 762 669 A1**
(43) Date de publication de la demande: **14.03.2007**
(21) Numéro de dépôt: 05108393.9
(22) Date de dépôt: 13.09.2005
(51) Int. Cl.: E04F 13/18, E04F 15/10, E04B 9/04, B29C 69/02

(54) **Ensemble de profilés**

(71) Demandeur: Deweerdt, Marc, 8800 Roesselare (BE)
(72) Inventeur: Deweerdt, Marc, 8800 Roesselare (BE)
(74) Mandataire: Gevers, François

(57) **Abrégé**

Ensemble de profilés pour recouvrir une surface plane comprenant au moins un premier (I), un deuxième (II) et un troisième éléments (III), dans lequel chaque élément comprend au moins un premier (1), un deuxième (2), un troisième (3) et un quatrième bord (4), ledit premier bord (1) est muni d'un premier moyen d'assemblage (5), ledit troisième bord (3) est muni d'un premier moyen de couplage (7) et ledit quatrième bord (4) est muni d'un deuxième moyen de couplage (8). Un deuxième moyen d'assemblage (6) est prévu à hauteur dudit deuxième bord (2). Le dit premier moyen de couplage (7) permet de coupler le premier élément (I) au deuxième élément (II) via le deuxième moyen de couplage (8). Ledit premier moyen d'assemblage (5) permet de mettre en contact ledit premier élément (I) avec le troisième élément (III), via le deuxième moyen d'assemblage (6).

## Description

La présente invention se rapporte à un ensemble de profilés prévu pour recouvrir une surface substantiellement plane comprenant au moins un premier, un deuxième et un troisième éléments, dans lequel :
■ chaque élément comprend au moins une surface supérieure et une surface inférieure, un premier bord et un deuxième bord, ledit deuxième bord étant parallèle audit premier bord, un troisième et un quatrième bord, ledit quatrième bord étant parallèle audit troisième bord,
■ ledit premier bord de chaque élément est muni d'un premier moyen d'assemblage,
■ ledit troisième bord de chaque élément est muni d'un premier moyen de couplage et ledit quantrième bord de chaque élément est muni d'un deuxième moyen de couplage, ledit premier moyen de couplage et le dit deuxième moyen de couplage étant complémentaires l'un à l'autre,
■ lesdits premier et deuxième éléments étant prévus pour être agencés de manière adjacente l'un à l'autre de sorte que le premier moyen de couplage du troisième bord du premier élément soit couplé au deuxième moyen de couplage du quatrième bord du deuxième élément,
■ lesdits premier et troisième éléments étant prévus pour être agencés de manière adjacente l'un à l'autre de sorte que le deuxième bord du premier élément soit en contact avec le premier moyen d'assemblage du troisième élément.

Par le terme profilé, on entend tout élément par exemple tout élément polymère extrudé, plein ou creux, ou comportant des voiles de renforcement, ou encore tout élément présentant un profil similaire d'élément polymère plein ou creux, ou comportant des voiles de renforcement, obtenu par un autre procédé.

Un tel ensemble de profilés est connu par exemple du document FR 2 832 470.

L'ensemble de profilés du document FR 2 832 470 comprend des moyens de couplage longitudinaux qui permettent d'attacher deux éléments côté-à-côte et qui, lorsque les profilés adjacents sont attachés ensemble sur leurs bords longitudinaux présentent une rainure de jonction présentant une bande apparente. Sur les côtés transversaux, chaque profilé présente des moyens d'assemblage sous la forme d'une gorge dans laquelle vient s'insérer une réglette d'assemblage. Une réglette s'insère donc entre deux profilés en pénétrant dans la gorge de l'un et dans cette de l'autre élément.

Malheureusement, une telle réglette d'assemblage n'est pas simple à placer. En effet, généralement dans ce type d'assemblage, pour des raisons de rigidité et de renforcement, on prévoit de placer les profilés côte à côte en les plaçant en quinconce. Dès lors, il faut préalablement découper la réglette à la largeur du profilé afin de pouvoir, par exemple dans le cas d'un mur recouvert de tels profilés, assembler sur le bord transversal, le profilé du bas et celui du haut. C'est-à-dire, qu'il faut fixer le profilé du bas, placer d'une main, celui du haut, en veillant qu'il reste emboîté dans celui d'à côté et le maintenir et glisser avec l'autre main la réglette d'assemblage, sans que les profilés ne bougent de leur position.

Si la réglette a été mal découpée, le profilé d'à côté ne s'emboîtera pas convenablement sur le bord longitudinal. Il faudra donc démonter tout le montage réalisé, ajuster la largeur de la réglette et recommencer.

En outre, dans le cas d'une pose de tels profilés sur un mur non parfaitement plan et vertical, il faudra réussir à glisser une réglette rigide de renforcement dans deux gorges non alignées. Ceci peut s'avérer être une opération difficile, coûteuse en terme de temps, peu pratique et qui demande une grande dextérité de la part de l'homme de métier. De plus, comme les réglettes se glissent par le côté, il faut bien prévoir, avant le montage des profilés sur le mur, par quel côté commencer et ne pas placer un élément de trop sans quoi tout sera à refaire.

Si les profilés sont placés sur un plafond, la situation reste la même à l'exception que toute l'opération se fait à bras tendus et que la pose en est encore compliquée.

L'invention a pour but de résoudre au moins en partie les problèmes mentionnés ci-dessus en procurant un ensemble de profilés plus simple à placer, qui n'exige pas une dextérité exagérée de la part du placeur, qui est plus rapide à placer, sans demander de découpe, tout en assurant un bel aspect esthétique. En effet, il est connu que l'aspect esthétique est un critère important de ce type de profilés et que l'assemblage ne sera esthétique que s'il est précis.

A cette fin, il est prévu suivant l'invention, un ensemble de profilés tel qu'indiqué au début dans lequel un deuxième moyen d'assemblage est prévu à hauteur dudit deuxième bord de chaque élément, ledit premier moyen d'assemblage du premier bord de chaque élément est muni d'au moins une première protubérance présentant une extrémité libre et une extrémité liée, ladite extrémité liée étant liée à ladite surface supérieure de l'élément, ladite première protubérance s'étendant à partir de l'extrémité liée à l'opposé de l'élément et présentant au moins une première partie comprenant un point central, dans lequel la première partie présente une surface tangentielle audit point central formant un angle α avec ladite surface supérieure de l'élément compris dans une plage allant de 1 à 90°, en particulier entre 30° et 60° et de préférence de l'ordre de 45°, et en ce qu'au moins un point, en particulier ladite extrémité libre de ladite première protubérance est en contact avec ledit deuxième moyen d'assemblage en dessous ou au dessus de ladite surface supérieure de l'élément lorsque lesdits premier et troisième éléments sont agencés de manière adjacente l'un à l'autre.

De cette façon, puisque le deuxième moyen d'assemblage s'étend à partir du deuxième bord, lequel deuxième bord est à juxtaposer avec le premier bord de l'élément suivant et que le premier moyen d'assemblage s'étend à partir du premier bord, l'assemblage en est grandement simplifié. Il n'est pas nécessaire de prévoir une pièce supplémentaire, telle qu'une réglette d'assemblage.

De plus, l'assemblage est réalisé par une mise en contact d'une première partie d'une protubérance comprenant un point central, laquelle première partie présente une surface tangentielle audit point central formant un angle α avec ladite surface supérieure de l'élément compris dans une plage allant de 1 à 90°, en particulier entre 30° et 60° et de préférence de l'ordre de 45°, et le deuxième moyen d'assemblage, ledit contact ayant lieu en dessous ou au dessus de ladite surface supérieure de l'élément. Dès lors, ceci assure un assemblage renforcé, par rapport, par exemple à un assemblage ayant lieu au niveau de la surface supérieure de l'élément. En effet, un assemblage au niveau de la surface supérieure aurait pour résultat un assemblage quelque peu flottant, voire inesthétique et la solidité de l'assemblage ne saurait être assurée par un assemblage flottant.

En outre, l'assemblage est réalisé par une simple mise en contact, qui ne demande pas de fixation en tant que telle et qui ne demande pas d'alignement parfait entre les deux moyens d'assemblage et qui dès lors est aussi simple à placer sur un mur neuf et parfaitement droit que sur un mur non régulier. En outre, lorsque l'ensemble de profilés selon l'invention est à placer au plafond, les avantages de la pose expliquée ci-dessus ressortent encore plus clairement puisque l'opération généralement réalisée à bout de bras, souvent pénible et difficile, devient une opération d'une simplicité non égalée.

Avantageusement, le deuxième moyen d'assemblage de chaque élément comprend au moins une deuxième protubérance présentant une extrémité libre et une extrémité liée, ladite extrémité liée étant liée à ladite surface supérieure de l'élément, ladite deuxième protubérance s'étendant à partir de l'extrémité liée à l'opposé de l'élément et présentant au moins une première partie comprenant un point central, dans lequel la première partie présente une surface tangentielle audit point central formant un angle β avec ladite surface supérieure de l'élément compris dans une plage allant de 1 à 90°, en particulier entre 30° et 60° et de préférence de l'ordre de 45°, et dans lequel au moins un point, en particulier ladite extrémité libre de ladite première protubérance est en contact au dessus ou en dessous de ladite surface supérieure dudit élément avec ladite deuxième protubérance lorsque lesdits premier et troisième éléments sont agencés de manière adjacente l'un à l'autre.

De cette façon, la mise en contact des deux moyens d'assemblage est en réalité une mise en contact de deux protubérances. Le fait que la deuxième protubérance présente également une première partie comprenant un point central, laquelle première partie présente une surface tangentielle audit point central formant un angle β avec ladite surface supérieure de l'élément compris dans une plage allant de 1 à 90°, en particulier entre 30° et 60° et de préférence de l'ordre de 45°, permet de faciliter encore la pose.

Dans le cas précité d'un placement dudit ensemble sur un mur, ledit troisième élément étant à placer par exemple au dessus du premier élément, puisque les deux premières parties desdites protubérances sont substantiellement inclinées, la mise en contact est réalisée en inclinant le troisième élément vers soi, en mettant en contact les dites protubérance et ensuite en le repoussant vers le mur. Ensuite l'emboîtement des bords longitudinaux est réalisé en faisant un mouvement de translation dudit troisième élément le long de la surface du mur vers le deuxième élément se trouvant à côté du premier et/ou du troisième élément(s) longitudinalement pour pouvoir emboîter les moyens de couplage susdits. Dès lors, la présence des deux premières parties desdites protubérances substantiellement inclinées crée un point de pivot qui simplifie largement encore la pose.

Dans une variante de ce qui est mentionné ci-dessus, le deuxième moyen d'assemblage comprend une rainure en retrait par rapport à une extrémité dudit deuxième bord, ladite rainure en retrait étant prévue pour loger au moins une partie de ladite première protubérance dudit premier bord lorsque lesdits premier et troisième éléments sont agencés de manière adjacente l'un à l'autre.

Le fait de loger la première protubérance du premier élément dans une rainure du troisième élément, permet une rigidification de l'assemblage, ce qui peut être avantageux dans certains cas de surface fortement sollicitée.

L'invention prévoit également que le deuxième bord de chaque élément soit muni des deux variantes ci-dessus des deuxièmes moyens d'assemblage, à savoir la deuxième protubérance et la rainure, pour renforcer encore l'assemblage, tout en offrant un bel aspect esthétique.

Avantageusement, la première partie d'au moins une desdites protubérances est une partie plane, une partie courbe concave ou convexe ou une combinaison de ceux-ci.

Avantageusement, au moins une desdites protubérances comprend en outre entre l'extrémité liée et ladite première partie, une deuxième partie substantiellement plane en prolongement de ladite surface supérieure dudit élément.

Dans une forme de réalisation préférentielle selon l'invention, une desdites protubérances comprend en outre entre l'extrémité libre et la première partie, une troisième partie substantiellement plane, essentiellement parallèle à ladite surface supérieur dudit élément.

Cette troisième partie de la protubérance présente plusieurs avantages. Tout d'abord lorsque le deuxième moyen d'assemblage est une rainure ou gorge en retrait, il est plus simple de produire une gorge substantiellement en retrait et parallèle à la surface supérieure qui logera donc une troisième partie de protubérance qui est substantiellement plane et parallèle elle-aussi à la surface supérieure.

Ladite troisième partie de la protubérance présente également un autre avantage quel que soit la forme de réalisation dudit deuxième moyen d'assemblage. En effet, lorsque les éléments sont assemblés entre eux, et qu'ils sont soumis à des changements de température, les éléments vont se dilater et se rétracter. La présence d'au moins une partie substantiellement plane en dessous du point de contact ou au point de contact par rapport à la surface supérieure des éléments permet que lors du changement de température, il puisse y avoir un certain jeu entre les éléments dans une direction bien définie qui ne défigurera pas l'assemblage.

En effet, si la troisième partie est présente sur le premier élément et que l'extrémité libre de la deuxième protubérance est en contact avec l'intersection entre la première partie et la troisième partie, le point de contact peut être déplacé sur toute la troisième partie sans laisser de surface de mur à recouvrir apparente. En outre, si par exemple les éléments assemblés sont trop justement juxtaposés et qu'un des éléments se rétracte alors, le retrait des éléments laisserait apercevoir une partie du mur recouvert. Ceci nuirait à l'esthétique de l'ensemble. Avec cette troisième partie, ces inconvénients sont évités. Le retrait d'un des éléments laissera apparente la surface supérieure de la troisième partie de la protubérance qui sera préférentiellement de la même teinte que l'élément.

Avantageusement, l'angle α et l'angle β sont égaux, procurant ainsi un effet de finition amélioré.

De préférence, lesdits premier et deuxième moyens de couplage constituent un emboîtement mâle-femelle qui forme une première jonction lorsque ledit troisième bord du premier élément est couplé au quatrième bord du deuxième élément, ladite première jonction présentant une première section transversale.

Comme il est bien connu de l'homme de métier, il est plus avantageux de disposer d'un ensemble où une jonction entre profilés est clairement visible qu'une jonction relativement masquée que l'oeil va chercher et ne manquera pas d'apercevoir puisque généralement ce type de jonction ne peut être parfaite.

Dès lors, selon l'invention, il est prévu une jonction entre les troisième et quatrième bord des éléments dont la géométrie est sensiblement respectée dans tout l'ensemble d'éléments.

Avantageusement, l'ensemble comprend une deuxième jonction lorsque le deuxième bord du premier élément est en contact avec le premier bord du troisième élément, ladite deuxième jonction présentant une deuxième section transversale. Pour les mêmes raisons que ce qui précède, il est avantageux que les deux autres bords (premier et deuxième bords) présentent également une jonction d'une certaine géométrie qui peut être conservée tout au long de l'ensemble. De préférence, ladite première section transversale et ladite deuxième section transversale présentent une géométrie similaire l'une à l'autre. En particulier, la géométrie est identique. Ceci permet un assemblage d'éléments très esthétique qui n'attire pas l'attention de l'oeil sur les jonctions, tout en permettant de masquer d'éventuelles imperfections. En dehors éventuellement de la géométrie, il peut également être prévu que ladite première section transversale présente une hauteur h1, ladite deuxième section transversale présente une hauteur h2, et ladite hauteur h1 est essentiellement identique à la hauteur h2.

D'autres formes de réalisation de l'ensemble de profilés selon l'invention sont indiquées dans les revendications annexées.

La présente invention se rapporte également un premier élément d'un ensemble de profilés à insérer dans ledit ensemble de profilés.

D'autres formes de réalisation du premier élément selon l'invention sont indiquées dans les revendications annexées.

L'invention se rapporte en outre à un procédé de fabrication comprenant:
- une extrusion dans une direction d'extrusion d'un profilé continu présentant une hauteur h, une surface supérieure et une surface inférieure, ladite surface supérieure présentant une épaisseur e,
- une découpe dudit profilé continu en éléments, chaque élément étant découpé à une longueur d'élément prédéterminée et présentant une première et une deuxième extrémité,
- un fraisage, de préférence effectuée lors de la découpe, dans une direction perpendiculaire à ladite direction d'extrusion, d'au moins ladite première extrémité de chaque élément sur une hauteur inférieure ou égale à ladite hauteur h diminuée de ladite épaisseur e à partir de la surface inférieure et sur une distance prédéterminée dans ladite direction d'extrusion, et
- un formage, dans ladite direction perpendiculaire à ladite direction d'extrusion, de ladite première extrémité fraisée de façon à obtenir au moins un premier moyen d'assemblage comprenant une première protubérance sur un premier bord dudit élément, laquelle protubérance comprenant une extrémité liée et une extrémité libre et présentant au moins une première partie comprenant un point central, la première partie présentant une surface tangentielle audit point central formant un angleα avec ladite surface supérieure de l'élément compris dans une plage allant de 1 à 90°, en particulier entre 30° et 60° et de préférence de l'ordre de 45°.

Dès lors, le procédé suivant l'invention permet de réaliser les éléments de l'ensemble d'éléments susdits en un procédé continu. L'étape de découpe permet que le profilé extrudé, déjà sorti de l'extrudeuse qui tire en fait la partie se trouvant encore dans l'extrudeuse, subisse une accélération suite à la découpe (la vitesse relative à laquelle il se déplace étant la même mais sont poids étant diminué, il subira une accélération qui permettra la réalisation des étapes suivantes). Avantageusement, la fraiseuse se déplace dans la direction d'extrusion avec le profilé et permet de réaliser au moins une protubérance d'une épaisseur e en éliminant la matière située sous la surface supérieure.

Ensuite, l'élément découpé et fraisé change de direction pour subir l'étape de formage. Avantageusement, l'étape de coupe et de fraisage sont réalisées par ladite fraiseuse simultanément. L'accélération du profilé permettant d'effectuer le changement de direction de l'élément de la direction d'extrusion dans la direction perpendiculaire à la direction d'extrusion sans créer d'encombrement ni de perturbation au sein du dispositif pour la mise en oeuvre du procédé selon l'invention.

Dans une forme de réalisation, le procédé selon l'invention comprend une étape de rainurage, dans ladite direction perpendiculaire à ladite direction d'extrusion, d'un deuxième bord de façon à former un deuxième moyen d'assemblage prévu pour loger ledit premier moyen d'assemblage. Ladite rainure sera de préférence d'une hauteur légèrement supérieure à e afin de loger ladite protubérance.

Dans une variante de la forme de réalisation du procédé selon l'invention, le procédé comprend un fraisage de la deuxième extrémité de chaque élément sur une hauteur inférieure ou égale à ladite hauteur h diminuée de ladite épaisseur e à partir de la surface inférieure et sur une largeur prédéterminée, dans une direction perpendiculaire à ladite direction d'extrusion et un formage, dans ladite direction perpendiculaire à ladite direction d'extrusion, de ladite deuxième extrémité fraisée de façon à obtenir au moins un deuxième moyen d'assemblage comprenant une deuxième protubérance sur un deuxième bord dudit élément présentant au moins une première partie comprenant un point central, la première partie présentant une surface tangentielle audit point central formant un angle β avec ladite surface supérieure de l'élément compris dans une plage allant de 1 à 90°, en particulier entre 30° et 60° et de préférence de l'ordre de 45°.

Le procédé peut bien sûr comprendre aussi bien le rainurage que le fraisage et le formage de la deuxième protubérance.

Avantageusement, le fraisage est réalisé au moyen d'une fraiseuse se déplaçant conjointement avec le profilé dans la direction d'extrusion et décrivant, dans ladite direction perpendiculaire à ladite direction d'extrusion, et à partir de ladite surface inférieure dudit élément une première trajectoire sensiblement ascendante, une deuxième trajectoire sensiblement horizontale et ensuite une troisième trajectoire sensiblement descendante.

Ceci permet de réaliser le fraisage dans le procédé en continu, sans devoir interrompre la chaîne de production. En outre, lorsque la découpe et le fraisage sont réalisés simultanément, et lorsque les éléments présentent une première et une deuxième protubérance, le fait d'avoir une fraiseuse qui se déplace conjointement avec les profilés permet de fraiser le premier bord d'un élément en même temps que le deuxième bord de l'élément suivant dans la chaîne de production. Dès lors, le procédé de fabrication est simplifié et la durée de fabrication d'un élément est raccourcie.

En outre, la succession des trajectoires de la fraiseuse permet d'avoir une découpe nette contrôlée des premier et deuxième bords de chaque élément et assure une meilleure finition du produit.

Avantageusement, la distance parcourue par la fraiseuse lors de ladite deuxième trajectoire sensiblement horizontale est inférieure à une largeur dudit élément. Lorsque l'élément est extrudé, entre la surface supérieure du profilé et les moyens de couplage présents sur le troisième et le quatrième bord, se trouvent un troisième et un quatrième bord substantiellement arrondi. Ce troisième et quatrième bord arrondi ne doivent avantageusement pas être fraisés complètement au risque de laisser apparaître un espace entre les éléments lorsqu'ils sont assemblés. Dès lors, la profondeur du fraisage ne doit pas nécessairement être la même sur largeur complète du profilé. Un fraisage d'une même profondeur sur toute la largeur peut avoir lieu et donnera le même effet technique, néanmoins, la finition sera pénalisée.

Avantageusement, la trajectoire formée de ladite première trajectoire, ladite deuxième trajectoire et ladite troisième trajectoire est une trajectoire sensiblement elliptique. Ceci permet de maintenir les troisième et quatrième bords arrondis des éléments sans devoir interrompre le fraisage et en en faisant donc une étape de fraisage continue.

De préférence, lors d'au moins une desdites étapes de formage, au moins une desdites protubérance est formée de telle façon qu'elle présente une troisième partie, entre ladite extrémité libre et ladite première partie, et au moins une desdites protubérance est formée de telle façon qu'elle présente une deuxième partie, entre ladite extrémité liée et ladite première partie.

Puisque la protubérance est formée au niveau de la surface supérieure, elle doit être repliée afin de permettre d'obtenir la forme de protubérance souhaitée selon l'invention. Dès lors avantageusement, à partir d'une distance prédéterminée de l'extrémité liée du profilé une première pliure sera réalisée afin de réaliser ladite première partie substantiellement inclinée et à partir d'une distance prédéterminée de l'extrémité libre, une deuxième pliure sera réalisée afin de réaliser la troisième partie très préférentielle dans de nombreuses applications. Ladite deuxième partie, comme il apparaît relativement clairement ici permet de faciliter le pliage des protubérances. En effet, avantageusement, le formage sera réalisé par au moins une roulette qui permet de plier la protubérance ou en introduisant l'élément dans une presse.

Dans certaines formes de réalisation, il peut être avantageux que le procédé comprenne une étape d'impression et/ou de laquage du profilé extrudé.

D'autres formes de réalisation du procédé suivant l'invention sont indiquées dans les revendications annexées.

D'autres caractéristiques, détails et avantages de l'invention ressortiront de la description donnée ci-après, à titre non limitatif et en faisant référence aux dessins annexés.

La figure 1 est une vue d'en haut d'un ensemble de profilés selon l'invention comprenant un premier élément et un deuxième élément couplés côte à côte et un troisième élément assemblé tête à tête au premier élément.

La figure 2 est une vue en coupe selon la ligne II-II illustrée à la figure 1.

La figure 3 est une vue éclatée de la vue en coupe illustrée à la figure 2.

La figure 4 est une vue en coupe d'une variante de la forme de réalisation illustrée en coupe aux figures 2 et 3.

La figure 5 est une vue en coupe selon la ligne V-V illustrée à la figure 1.

La figure 6 est une vue schématique de certaines variantes préférentielles selon l'invention.

La figure 7 est un diagramme d'un exemple de réalisation du procédé de fabrication des éléments selon l'invention.

La figure 8 est une vue en coupe d'une partie du profilé produit à la figure 7.

La figure 9 est une vue en coupe selon la ligne IX-IX illustrée à la figure 1 indiquant la trajectoire de fraisage suivant une forme de réalisation particulière.

Sur les figures, les éléments identiques ou analogues portent les mêmes références.

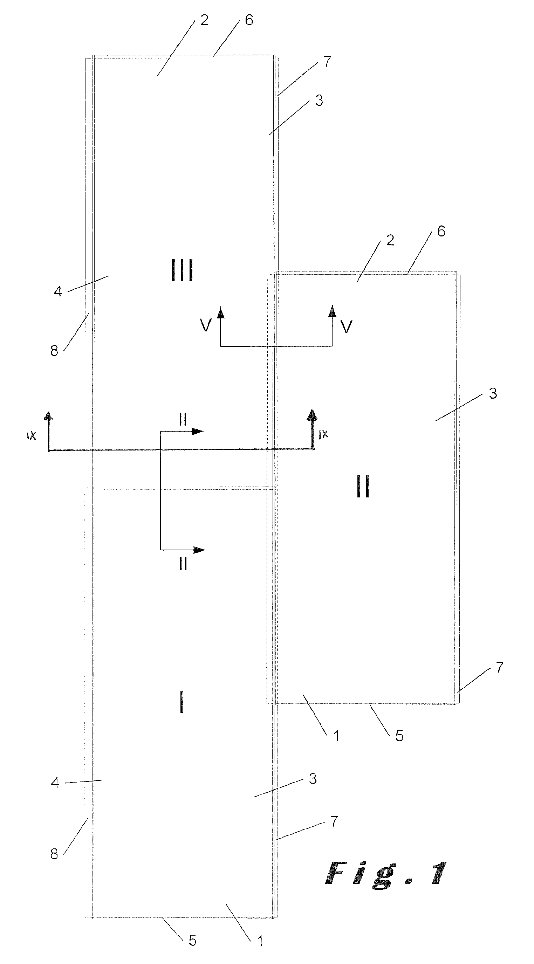

Comme on peut le voir à la figure 1, l'invention se rapporte à un ensemble de profilés comprenant un premier élément I, un deuxième élément II et un troisième élément III.

Chaque élément comprend un premier bord 1, un deuxième bord 2, un troisième bord 3 et un quatrième bord 4. Le premier bord 1 de chaque élément I, II, III est muni d'un premier moyen d'assemblage 5, le deuxième bord 2 de chaque élément I, II, III est muni d'un deuxième moyen d'assemblage 6, le troisième bord 3 de chaque élément I, II, III comprend un premier moyen de couplage 7 et le quatrième bord 4 de chaque élément I, II, III comprend un deuxième moyen de couplage 8.

Dans la description ici, on a chaque fois considéré un assemblage à placer contre une surface murale, le premier élément étant l'élément du bas et le troisième étant l'élément posé au dessus du premier élément. Le deuxième élément étant placé en quinconce à côté du premier et du troisième élément.

Bien évidemment, tout ce qui est expliqué ici est valable quelque soit le type de surface à recouvrir, un plafond, un sol, un mur, une porte, un tour de fenêtre, une enceinte de douche, une surface de travail, et analogue et quelque soit l'ordre des éléments. Puisque tous les éléments sont identiques, ils sont forcément interchangeable dans l'explication ci-après. En outre, pour des facilités de compréhension, et parce que c'est le plus courant, les éléments selon l'invention sont illustrés comme présentant une surface supérieure d'élément substantiellement rectangulaire. Bien évidemment, si la surface supérieure de l'élément est un carré, un trapèze de préférence régulier, un losange, ou toute forme géométrique présentant quatre côtés parallèles deux à deux, l'invention s'applique également.

De manière similaire, il est clair pour l'homme de métier que la forme triangulaire est considérée comme un équivalent puisque deux triangles isocèles placés à l'opposé l'un de l'autre forment un losange. Dans ce cas, un élément est formé par deux de ces triangles. En outre, des formes octogonales, hexagonales, etc. sont également comprises dans la portée de la protection revendiquée puisqu'ils comportent au moins deux fois deux côtés parallèles.

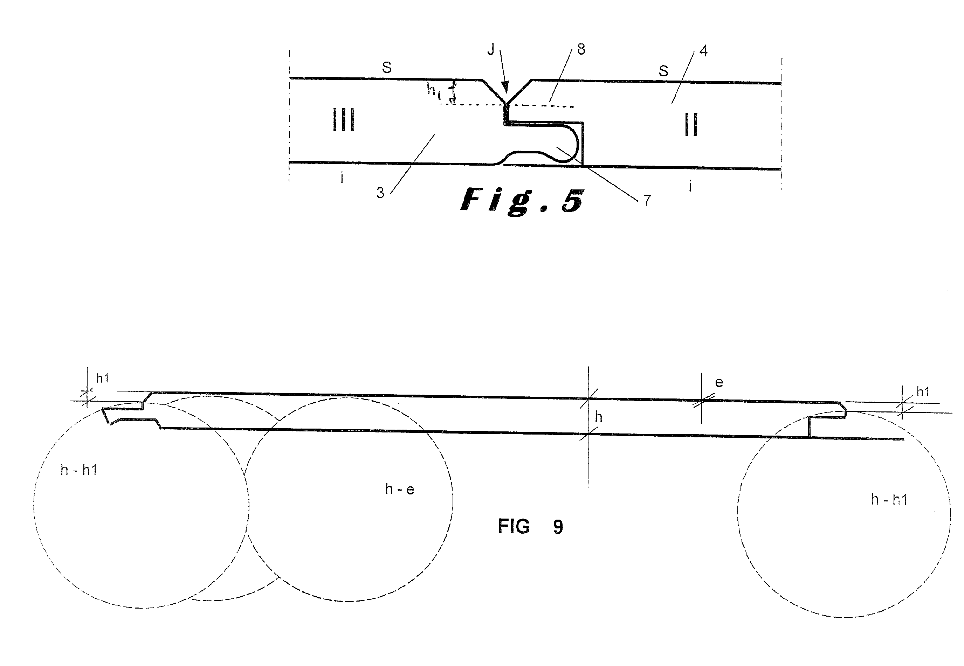

Le couplage des moyens de couplage est illustré plus en détails à la figure 5 qui est une vue en coupe selon la ligne V-V de la figure 1.

Dans la forme de réalisation illustrée à la figure 5, à titre d'exemple, où chaque élément I, II, III est substantiellement rectangulaire, les moyens de couplage 7 et 8 constituent le couplage longitudinal des éléments I, II, III. Comme on peut le voir, ce couplage longitudinal est en réalité un emboîtement mâle-femelle bien connu dans l'art, ledit moyen mâle 7 étant porté par le troisième bord 3 et ledit emboîtement femelle 8 étant porté par le quatrième bord 4. Bien entendu, le contraire étant également possible puisque le nom de troisième et quatrième bords ont été donnés arbitrairement aux côtés de l'élément.

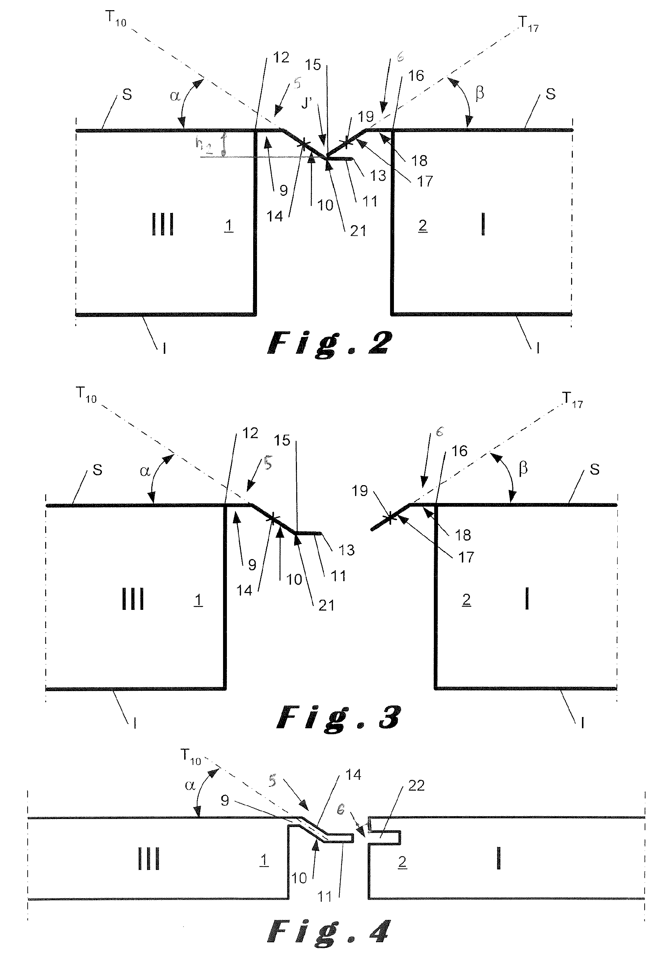

L'assemblage tête à tête du premier élément I et du troisième élément III par l'intermédiaire du premier bord 1 et du deuxième bord 2 est illustré plus en détails, par exemple, aux figures 2 et 3 qui seront commentées ensemble.

Comme mentionné précédemment, le premier bord 1 de chaque élément I, II, III est muni d'un premier moyen d'assemblage 5 qui comprend une première protubérance. La première protubérance comprend une première partie 10, une deuxième partie 9 et une troisième partie 11.

La première protubérance comprend une extrémité libre 13 et une extrémité liée 12. L'extrémité liée correspond à une intersection entre la première protubérance et la surface supérieure S de l'élément I, II, III. Comme on peut le voir, la première protubérance s'étend à partir de l'extrémité liée 12 à l'opposé de l'élément I, II, III et présente au moins une première partie 10 qui comprend un point central 14, dans lequel la première partie 10 présente une surface tangentielle T₁₀ audit point central 14 formant un angle α avec la surface supérieure S de l'élément. L'angle α est compris dans une plage allant de 1 à 90°, en particulier entre 30° et 60° et de préférence de l'ordre de 45°.

Dans cette forme de réalisation, la première protubérance comprend en outre entre l'extrémité liée 12 et ladite première partie 10, une deuxième partie plane 9 en prolongement de la surface supérieure S de l'élément et entre l'extrémité libre 13 et la première partie 10, une troisième partie 11 substantiellement plane, essentiellement parallèle à la surface supérieure S de l'élément.

Dans la forme de réalisation illustrée aux figures 2 et 3, le deuxième bord 2 est muni du deuxième moyen d'assemblage 6. Le deuxième moyen d'assemblage 6 comprend également une deuxième protubérance qui présente une extrémité libre 15 et une extrémité liée 16. L'extrémité liée 16 correspondant à l'intersection de la deuxième protubérance et de la surface supérieure S de l'élément. Comme la première protubérance, la deuxième protubérance s'étend à partir de l'extrémité liée 16 à l'opposé de l'élément I, II, III et présente au moins une première partie 17 comprenant un point central 19. La première partie 17 présente une surface tangentielle T₁₇ au point central 19 formant un angle β avec la surface supérieure S de l'élément. L'angle β est compris dans une plage allant de 1 à 90°, en particulier entre 30° et 60° et de préférence de l'ordre de 45°.

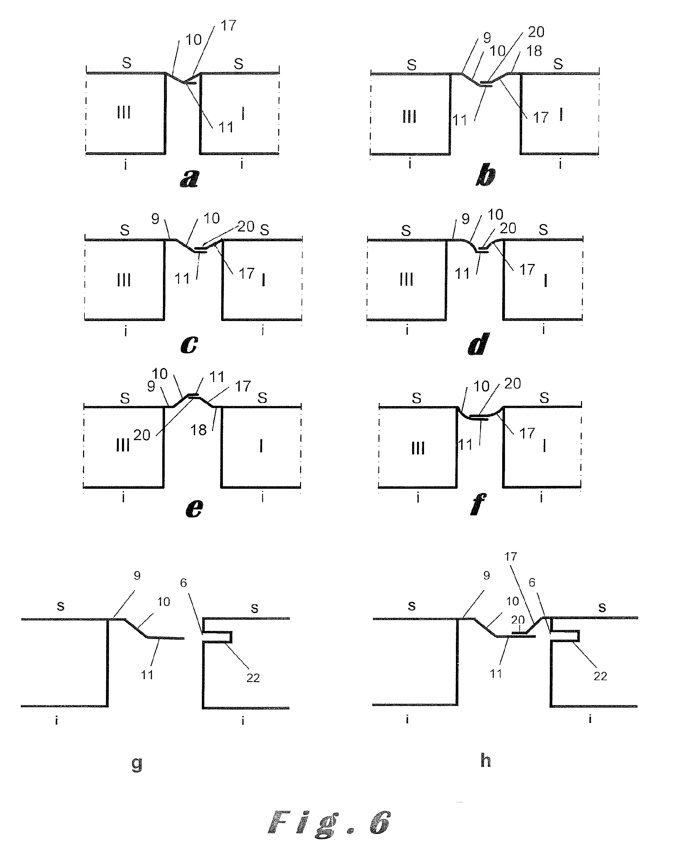

De préférence, la deuxième protubérance comprend également une deuxième partie 18 plane en prolongement de la surface supérieure S de l'élément I, II, III entre l'extrémité liée 16 et la première partie 17 et éventuellement (voir figure 6 b,c,d,f) entre l'extrémité libre 15 et la première partie 17, une troisième partie 20 substantiellement plane et essentiellement parallèle à la surface supérieure S de l'élément I, II, III.

Selon l'invention, au moins un point 21 de la première protubérance est en contact au dessus ou en dessous de la surface supérieure S de l'élément I, II, III avec le deuxième moyen d'assemblage 7 et selon cette forme de réalisation avec la deuxième protubérance lorsque le premier élément I et le troisième élément III sont agencés en tête à tête.

On peut également dire qu'au moins un point du deuxième moyen d'assemblage, ici, l'extrémité libre 15 de la deuxième protubérance est en contact avec la première protubérance à l'intersection entre la troisième partie 11 et la première partie 10.

De même que précédemment, comme tous les numéros d'éléments peuvent être inversés, la première protubérance peut devenir la deuxième, les éléments étant tous les mêmes.

L'assemblage des éléments I, II, III selon l'invention est une mise en contact des deux moyens d'assemblage 6 et 7 qui est en réalité une mise en contact de la première et de la deuxième protubérance dans cette forme de réalisation des figures 2 et 3.

Dans le cas précité d'un placement dudit ensemble sur un mur, le troisième élément III étant à placer au dessus du premier élément I, puisque les deux premières parties 10, 17 desdites protubérances sont inclinées, la mise en contact est réalisée en inclinant le troisième élément III vers soi, en mettant en contact les dites protubérance et ensuite en le repoussant vers le mur. Ensuite l'emboîtement des bords longitudinaux 3(7) et 4(8) est réalisé en faisant un mouvement de translation dudit troisième élément III le long de la surface du mur vers le deuxième élément II se trouvant à côté du premier élément I et du troisième élément III longitudinalement pour pouvoir emboîter les moyens de couplage 7 et 8 susdits. Dès lors, la présence des deux premières parties 10 et 17 des protubérances substantiellement inclinées crée au moins un point de pivot 21, en réalité un axe de pivot 21 qui simplifie largement la pose.

Dans une variante de ce qui est mentionné ci-dessus illustrée à la figure 4, le deuxième moyen d'assemblage 7 comprend une rainure 22 ou une gorge 22 en retrait par rapport à une extrémité dudit deuxième bord 2.

La première protubérance du premier bord 1 de chaque élément comprend la première partie 10, la deuxième partie 9 et la troisième partie 11. La première protubérance comprend également l'extrémité libre 13 et une extrémité liée 12. Comme aux figures précédentes, la première protubérance présente la première partie 10 qui comprend un point central 14, dans lequel la première partie 10 présente une surface tangentielle T₁₀ audit point central 14 formant un angle α avec la surface supérieure S de l'élément. L'angle α est compris dans une plage allant de 1 à 90°, en particulier entre 30° et 60° et de préférence de l'ordre de 45°.

Dans cette variante, la rainure 22 en retrait est prévue pour loger au moins une partie de la première protubérance dudit premier bord 1 lorsque le premier élément I et le troisième élément III sont agencés de en tête à tête. Dans la forme de réalisation préférentielle illustrée, la rainure 22 en retrait est prévue pour loger la troisième partie 11 de la première protubérance. La troisième partie 11 est comme on l'a mentionné précédemment une partie substantiellement plane parallèle à la surface supérieure S de l'élément I, II, III. Dès lors, la rainure ou gorge 22 est également une rainure 22 en retrait substantiellement plane, et essentiellement parallèle à la surface supérieur S de l'élément I, II, III.

Dans des variantes, si la première protubérance ne comprend pas de troisième partie, la rainure ou gorge 22 sera une cavité en retrait inclinée pour loger au moins une partie de la première partie de la première protubérance. En réalité, la rainure 22 comprendra un point central par lequel passe une surface tangentielle qui sera inclinée par rapport à la surface supérieure S de l'élément placé contre le deuxième bord 2 comprenant la rainure 22 d'un angle α.

Par exemple, la rainure 22 portée par le deuxième bord 2 du premier élément I qui est prévue pour loger la première partie 10 de la première protubérance du premier bord 1 du troisième élément III comprend un point central par lequel passe une surface tangentielle qui forme un angle avec la surface supérieure S du troisième élément III qui vaut α.

Quelle que soit la forme de réalisation du deuxième moyen d'assemblage, le couplage et/ou l'assemblage des éléments est chaque fois prévu pour que les éléments puissent se dilater ou se rétracter à la suite d'un changement de température sans défigurer l'assemblage et/ou le couplage et sans laisser de partie de surface recouverte apparente par exemple lors d'un retrait.

L'invention prévoit également que le deuxième bord soit muni des deux variantes ci-dessus des deuxièmes moyens d'assemblage pour renforcer encore l'assemblage. Cette forme de réalisation est illustrée à la figure 6h.

Les figures 6 a - f illustrent une série de formes de réalisation des protubérances des éléments selon l'invention dans lesquelles les protubérances peuvent comporter comme première partie, une partie plane, une partie courbe concave ou convexe ou une combinaison de ceux-ci.

Le tableau ci-dessous illustre quelques variantes correspondant à celles illustrées parmi la grande variété de variantes. Chaque colonne indique quelles sont les parties des protubérances présentes ainsi que leur forme et la nature du point de contact, en particulier de la ligne de contact, voire de la surface de contact.

| Première protubérance | | a | b | c | d | e | f |
|---|---|---|---|---|---|---|---|
| | Première partie | oui | oui | oui | oui | oui | oui |
| | Deuxième partie | non | oui | oui | oui | oui | non |
| | Troisième partie | oui | oui | oui | oui | oui | oui |
| | Forme de la première partie | plane | plane | plane | convexe | plane | concave |

| Deuxième protubérance | | | | | | | |
|---|---|---|---|---|---|---|---|
| | Première partie | oui | oui | oui | oui | oui | oui |
| | Deuxième partie | non | oui | non | non | oui | non |
| | Troisième partie | non | oui | oui | oui | oui | oui |
| | Forme de la première partie | plane | plane | plane | convexe | plane | concave |
| Nature du point de contact | | droite | surface | surface | surface | surface | surface |

Dans l'exemple a, le point de contact est une droite de contact entre l'extrémité libre de la deuxième protubérance et l'intersection entre la première partie de la première protubérance et la troisième partie de la première protubérance.
Dans l'exemple b, le point de contact est une surface de contact entre la troisième partie de la deuxième protubérance et la troisième partie de la première protubérance.
Dans l'exemple c, le point de contact est une surface de contact entre la troisième partie de la deuxième protubérance et la troisième partie de la première protubérance.
Dans l'exemple d, le point de contact est une surface de contact entre la troisième partie de la deuxième protubérance et la troisième partie de la première protubérance.
Dans l'exemple e, le point de contact est une surface de contact entre la troisième partie de la deuxième protubérance et la troisième partie de la première protubérance.
Dans l'exemple f, le point de contact est une surface de contact entre la troisième partie de la deuxième protubérance et la troisième partie de la première protubérance.

Les figures 6 g et 6 h illustrent deux formes de réalisation où les deuxièmes moyens d'assemblage comprennent une rainure. Dans le cas de la figure 6 h, les deuxièmes moyens d'assemblage comprennent également une deuxième protubérance ce qui renforce davantage l'assemblage. Dans ces deux formes, on pourrait également prévoir, le cas échéant, une encoche sur la première protubérance ainsi qu'une cavité complémentaire dans la rainure afin d'assurer un verrouillage lorsque la première protubérance d'un élément est assemblé à la rainure d'un deuxième élément.

Comme on peut le voir, par rapport à la surface supérieure de l'élément, le contact doit être réalisé au dessus ou au dessous de celle-ci par rapport à une direction perpendiculaire à une surface à recouvrir.

De préférence, l'angle α et l'angle β sont égaux en valeur relative, ce qui procure un effet de finition amélioré.

De manière particulièrement préférentielle, comme on peut le voir en comparant les figures 5 et 2, la jonction J entre le troisième bord 3 et le quatrième bord 4 entre le premier élément I et le deuxième élément II est de section transversale substantiellement triangulaire.

La jonction J' entre le deuxième bord 2 et le premier bord 1 entre le premier élément I et le troisième élément III est de section transversale substantiellement triangulaire. De préférence, les sections transversales sont similaires, voire identiques afin d'améliorer l'aspect esthétique de l'ensemble. En particulier, la hauteur h1 de la première jonction J est quasiment identique à la hauteur h2 de la deuxième jonction J'.

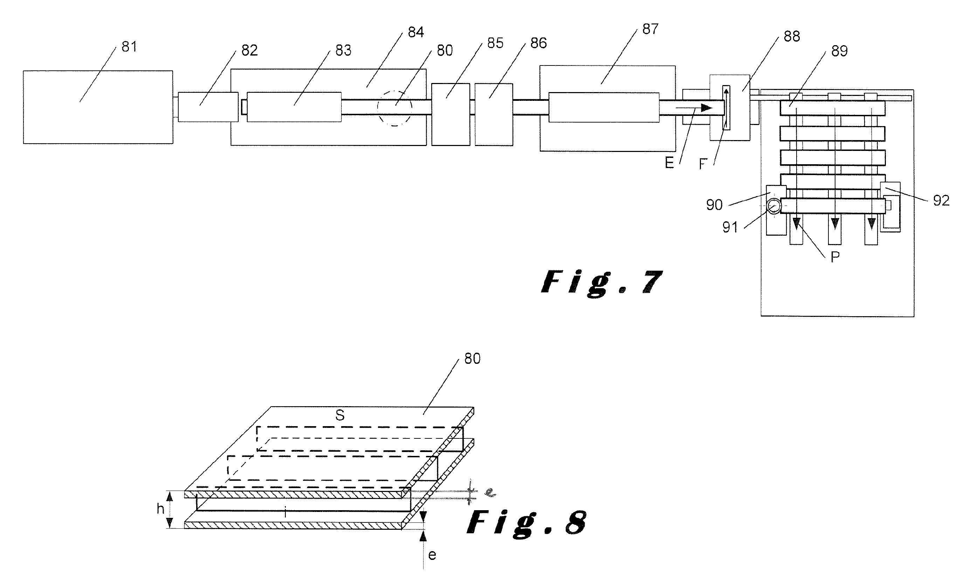

La figure 7 représente un diagramme du procédé de production des éléments de l'ensemble selon l'invention.

Selon l'invention, le procédé comprend une extrusion dans une direction d'extrusion représenté par une flèche E d'un profilé 80 continu dans une extrudeuse 81. Le profilé 80 a une hauteur h, une surface supérieure S et une surface inférieure i. la surface supérieure S et de préférence la surface inférieure i ont une épaisseur e (voir figure 8).

Dans le mode de réalisation illustré ici, il est prévu une filière d'extrusion 82 suivi d'éléments conformateurs 83 placés sur une table de calibrage 84. Ces éléments sont généralement présents dans les chaînes d'extrusion.

Le procédé comprend avantageusement une étape d'impression et de laquage lorsque c'est nécessaire. L'impression et le laquage sont réalisés respectivement dans une unité d'impression 85 et de laquage 86. Suivant une alternative, on prévoit une unité de laminage au lieu des unités d'impression et de laquage.

Lors de la formation du profilé, une unité de trait ("puller") 87 tire le profilé afin de maintenir sa vitesse de sortie de la filière d'extrusion. La vitesse préférentielle dans cette forme de réalisation est de l'ordre de 5 m/min.

Le profilé sortant de l'unité de trait 87 subit une étape de découpe et de fraisage qui est, dans cette forme de réalisation une seule et même étape. Ceci dépend évidement des formes de réalisations prévues, en particulier, les formes de réalisation des deuxièmes moyens d'assemblage.

La découpe et le fraisage sont réalisés par une fraiseuse 88 qui est reliée par un vérin à la surface supérieure du profilé 80 afin d'assurer que la fraiseuse 88 se déplace en même temps que le profilé.

La fraiseuse 88 travaille suivant une direction perpendiculaire à ladite direction d'extrusion F et découpe le profilé 80 à une longueur d'élément prédéterminée. La fraiseuse dans cette forme de réalisation fraise la première extrémité de chaque élément sur une hauteur inférieure ou égale à ladite hauteur h diminuée de ladite épaisseur e à partir de la surface inférieure et sur une distance prédéterminée dans ladite direction d'extrusion, et la deuxième extrémité de chaque élément sur une hauteur inférieure ou égale à ladite hauteur h diminuée de ladite épaisseur e à partir de la surface inférieure et sur une largeur prédéterminée, dans une direction perpendiculaire à ladite direction d'extrusion simultanément, c'est-à-dire que la fraiseuse est reliée au profilé continu et fraise la première extrémité de ce qui deviendra la premier profilé à sortie et la deuxième extrémité de ce qui deviendra le deuxième profilé à sortie, et ainsi de suite.

Le profilé continu ainsi découpé en élément subit une accélération puisqu'il ne tire plus le poids du profilé continu. Ceci permet de réaliser le changement de direction du procédé et de diriger les éléments dans une direction de formage par pliage soit P. Tous les éléments découpés et fraisés 89 sont alignés et vont passer dans une unité de formage/pliage 90. Le pliage se fait par le passage des protubérances formées lors du fraisage sous une roulette 91 qui va incliner une partie de la protubérance et ensuite une deuxième roulette par exemple replie cette première partie inclinée pour en faire une troisième partie substantiellement parallèle à la surface supérieure du profilé, mais positionnée à un niveau différent de celui du profilé. Ces deux pliages peuvent être réalisés simultanément par deux roulettes 91 parallèles.

Si les deuxièmes moyens d'assemblage sont des deuxièmes proptubérances, la même chose est réalisée de l'autre côté du profilé.

Si les deuxièmes moyens d'assemblage sont des rainures, le procédé comprend en outre une étape de rainurage, dans ladite direction perpendiculaire à ladite direction d'extrusion, d'un deuxième bord pour former le deuxième moyen d'assemblage prévu pour loger ledit premier moyen d'assemblage. L'étape de rainurage est réalisé par exemple par un couteau circulaire 92 ou une fraiseuse ou tout autre moyen analogue permettant de fabriquer une rainure.

Dans une forme de réalisation préférentielle la fraiseuse se déplace conjointement avec le profilé dans la direction d'extrusion et décrit, dans cette direction perpendiculaire à la direction d'extrusion, et à partir de ladite surface inférieure dudit élément une première trajectoire sensiblement ascendante, une deuxième trajectoire sensiblement horizontale et ensuite une troisième trajectoire sensiblement descendante.

De préférence, la distance parcourue par la fraiseuse lors de la deuxième trajectoire sensiblement horizontale est inférieure à une largeur dudit élément. En outre, les trajectoires sont de préférence des trajectoires sensiblement elliptiques.

Telle qu'illustré à la figure 9, la première trajectoire est en particulier prévu pour prélever de la matière suivant une profondeur h - h1, la deuxième trajectoire suivant une profondeur h - e et la troisième trajectoire suivant une profondeur h - h1.

Le cas échéant, ces trajectoires peuvent être effectuées lors d'une étape de fraisage supplémentaires après la découpe et le premier fraisage.

Il est bien entendu que la présente invention n'est en aucune façon limitée aux formes de réalisations décrites ci-dessus et que bien des modifications peuvent y être apportées sans sortir du cadre des revendications annexées.

### Liste des éléments

I = premier élément
II = deuxième élément
III = troisième élément
S = surface supérieure de chaque élément
i= surface inférieure de chaque élément
J = jonction longitudinale entre deux éléments (première jonction)
J' = jonction transversale entre deux éléments (deuxième jonction)
h1 = hauteur de la section transversale de la première jonction
h2 = hauteur de la section transversale de la deuxième jonction
E = direction d'extrusion
F= direction de fraisage
P = direction de formage
h = hauteur du profilé
e = épaisseur de la surface supérieure du profilé
1 = premier bord de chaque élément
2 = deuxième bord de chaque élément
3 = troisième bord de chaque élément
4 = quatrième bord de chaque élément
5 = premier moyen d'assemblage
6 = deuxième moyen d'assemblage
7 = premier moyen de couplage
8 = deuxième moyen de couplage
9 = deuxième partie de la première protubérance du premier moyen d'assemblage
10 = première partie de la première protubérance du premier moyen d'assemblage
11 = troisième partie de la première protubérance du premier moyen d'assemblage
12 = extrémité liée de la première protubérance liée à la surface supérieure
13 = extrémité libre de la première protubérance
14 = point central de la première partie de la première protubérance
T₁₀ = surface tangentielle au point central de la première partie de la première protubérance
15 = extrémité libre de la deuxième protubérance
16 = extrémité liée de la deuxième protubérance à la surface supérieure
17 = première partie de la deuxième protubérance du deuxième moyen d'assemblage
18 = deuxième partie de la deuxième protubérance du deuxième moyen d'assemblage
19 = point central de la première partie de la deuxième protubérance
20 = troisième partie de la première protubérance du premier moyen d'assemblage
T₁₇ = surface tangentielle au point central de la première partie de la deuxième protubérance
21 = point de contact, ligne de contact ou surface de contact entre les deux moyens d'assemblage
22 = rainure du deuxième moyen d'assemblage
80 = profilé
81 = extrudeuse
82 = filière d'extrusion
83 = élément conformateur
84 = table de calibrage
85 = unité d'impression
86 = unité de laquage
87 = unité de trait ("puller")
88 = fraiseuse
89 = éléments découpés et fraisés 90 = unité de formage/pliage
91 = roulette de pliage
92 = couteau circulaire

## Revendications

1. Ensemble de profilés prévu pour recouvrir une surface substantiellement plane comprenant au moins un premier (1), un deuxième (II) et un troisième éléments (III), dans lequel
■ chaque élément comprend au moins une surface supérieure (S) et une surface inférieure (i), un premier bord (1) et un deuxième bord (2), ledit deuxième bord (2) étant parallèle audit premier bord (1), un troisième (3) et un quatrième bord (4), ledit quatrième bord (4) étant parallèle audit troisième bord (3),
■ ledit premier bord (1) de chaque élément (I, II, III) est muni d'un premier moyen d'assemblage (5),
■ ledit troisième bord (3) de chaque élément (I, II, III) est muni d'un premier moyen de couplage (7) et ledit quatrième bord (4) de chaque élément (I, II, III) est muni d'un deuxième moyen de couplage (8), ledit premier moyen de couplage (7) et le dit deuxième moyen de couplage (8) étant complémentaire l'un à l'autre,
■ lesdits premier (I) et deuxième éléments (II) étant prévus pour être agencés de manière adjacente l'un à l'autre de sorte que le premier moyen de couplage (7) du troisième bord (3) du premier élément (I) soit couplé au deuxième moyen de couplage (8) du quatrième bord (4) du deuxième élément (II),
■ lesdits premier (I) et troisième éléments (III) étant prévus pour être agencés de manière adjacente l'un à l'autre de sorte que le deuxième bord (2) du premier élément (I) soit en contact avec le premier moyen d'assemblage (5) du troisième élément (III),
**caractérisé en ce qu'**un deuxième moyen d'assemblage (6) est prévu à hauteur dudit deuxième bord (2) de chaque élément (I, II, III), ledit premier moyen d'assemblage (5) du premier bord (1) de chaque élément (I, II, III) est muni d'au moins une première protubérance présentant une extrémité libre (13) et une extrémité liée (12), ladite extrémité liée (12) étant liée à ladite surface supérieure (S) de l'élément (I, II, III), ladite première protubérance s'étendant à partir de l'extrémité liée (12) à l'opposé de l'élément (I, II, III) et présentant au moins une première partie (10) comprenant un point central (14), dans lequel la première partie (10) présente une surface tangentielle (T₁₀) audit point central (14) formant un angle α avec ladite surface supérieure (S) de l'élément (I, II, III) compris dans une plage allant de 1 à 90°, en particulier entre 30° et 60° et de préférence de l'ordre de 45°, et **en ce qu'**au moins un point, en particulier ladite extrémité libre (13) de ladite première protubérance est en contact avec ledit deuxième moyen d'assemblage (6) en dessous ou au dessus de ladite surface supérieure (S) de l'élément (I, II, III) lorsque lesdits premier (I) et troisième éléments (III) sont agencés de manière adjacente l'un à l'autre.

2. Ensemble de profilés selon la revendication 1, dans lequel ledit deuxième moyen d'assemblage (6) du deuxième bord (2) de chaque élément (I, II, III) comprend au moins une deuxième protubérance présentant une extrémité libre (15) et une extrémité liée (16), ladite extrémité liée (16) étant liée à ladite surface supérieure (S) de l'élément (I, II, III), ladite deuxième protubérance s'étendant à partir de l'extrémité liée (16) à l'opposé de l'élément (I, II, III) et présentant au moins une première partie (17) comprenant un point central (19), dans lequel la première partie (17) présente une surface tangentielle (T₁₇) audit point central (19) formant un angle β avec ladite surface supérieure (S) de l'élément (I, II, III) compris dans une plage allant de 1 à 90°, en particulier entre 30° et 60° et de préférence de l'ordre de 45°, et dans lequel au moins un point, en particulier ladite extrémité libre (13) de ladite première protubérance est en contact au dessus ou en dessous de ladite surface supérieure (S) dudit élément (I, II, III) avec ladite deuxième protubérance lorsque lesdits premier (I) et troisième éléments (III) sont agencés de manière adjacente l'un à l'autre.

3. Ensemble de profilés selon la revendication 1 ou la revendication 2, dans lequel ledit deuxième moyen d'assemblage (6) comprend une rainure (22) en retrait par rapport à une extrémité dudit deuxième bord (2), ladite rainure (22) en retrait étant prévue pour loger au moins une partie de ladite première protubérance dudit premier bord 1 lorsque lesdits premier (I) et troisième éléments (III) sont agencés de manière adjacente l'un à l'autre.

4. Ensemble de profilés selon l'une quelconque des revendications précédentes, dans lequel ladite première partie (10,17) d'au moins une desdites protubérances est une partie plane, une partie courbe concave ou convexe ou une combinaison de ceux-ci.

5. Ensemble de profilés selon l'une quelconque des revendications précédentes, dans lequel une desdites protubérances comprend en outre entre l'extrémité liée (12,16) et ladite première partie (10,17), une deuxième partie (9,18) substantiellement plane en prolongement de ladite surface supérieure (S) dudit élément (I, II, III).

6. Ensemble de profilés selon l'une quelconque des revendications précédentes, dans lequel une desdites protubérances comprend en outre entre l'extrémité libre (13,15) et la première partie (10,17), une troisième partie (11,20) substantiellement plane, essentiellement parallèle à ladite surface supérieur dudit élément.

7. Ensemble de profilés selon l'une quelconque des revendications 2 à 6, dans lequel l'angle α et l'angle β sont égaux en valeur relative.

8. Ensemble de profilés selon l'une quelconque des revendications précédentes, comprenant en outre une première jonction (J) lorsque ledit troisième bord (3) du premier élément (I) est couplé au quatrième bord (4) du deuxième élément (II), ladite première jonction (J) présentant une première section transversale.

9. Ensemble de profilés selon l'une quelconque des revendications précédentes, comprenant en outre une deuxième jonction (J') lorsque le deuxième bord (2) du premier élément (I) est en contact avec le premier bord (1) du troisième élément (III), ladite deuxième jonction (J') présentant une deuxième section transversale.

10. Ensemble de profilés selon les revendications 8 et 9, dans lequel ladite première section transversale et ladite deuxième section transversale présentent une géométrie similaire, en particulier identique, l'une à l'autre.

11. Ensemble de profilés selon les revendications 8 et 9 ou 10, dans lequel ladite première section transversale présente une hauteur h1, ladite deuxième section transversale présente une hauteur h2, et ladite hauteur h1 est essentiellement identique à la hauteur h2.

12. Premier élément (I) d'un ensemble de profilés selon l'une quelconque des revendications précédentes à insérer dans ledit ensemble de profilés.

13. Procédé de fabrication de profilés comprenant:
■ une extrusion dans une direction d'extrusion d'un profilé continu (80) présentant une hauteur h, une surface supérieure (S) et une surface inférieure (i), ladite surface supérieure (S) présentant une épaisseur e,
■ une découpe dudit profilé continu (80) en éléments (89), chaque élément étant découpé à une longueur d'élément prédéterminée et présentant une première et une deuxième extrémité,
■ un fraisage, de préférence effectuée lors de la découpe, dans une direction perpendiculaire (F) à ladite direction d'extrusion (E), d'au moins ladite première extrémité de chaque élément sur une hauteur inférieure ou égale à ladite hauteur h diminuée de ladite épaisseur e à partir de la surface inférieure (i) et sur une distance prédéterminée dans ladite direction d'extrusion (E), et
■ un formage, dans ladite direction perpendiculaire (P) à ladite direction d'extrusion (E), de ladite première extrémité fraisée de façon à obtenir au moins un premier moyen d'assemblage (5) comprenant une première protubérance sur un premier bord (1) dudit élément, laquelle protubérance comprenant une extrémité liée (12) et une extrémité libre (13) et présentant au moins une première partie (10) comprenant un point central (14), la première partie (10) présentant une surface tangentielle (T₁₀) audit point central (14) formant un angle α avec ladite surface supérieure (S) de l'élément compris dans une plage allant de 1 à 90°, en particulier entre 30° et 60° et de préférence de l'ordre de 45°.

14. Procédé selon la revendication 13 comprenant en outre une étape de rainurage, dans ladite direction perpendiculaire (P) à ladite direction d'extrusion (E), d'un deuxième bord (2) de façon à former un deuxième moyen d'assemblage (6) prévu pour loger ledit premier moyen d'assemblage (5).

15. Procédé selon la revendication 13 ou la revendication 14 comprenant en outre un fraisage de la deuxième extrémité de chaque élément sur une hauteur inférieure ou égale à ladite hauteur h diminuée de ladite épaisseur e à partir de la surface inférieure (i) et sur une largeur prédéterminée, dans une direction perpendiculaire (F) à ladite direction d'extrusion (E) et un formage, dans ladite direction perpendiculaire (P) à ladite direction d'extrusion (E), de ladite deuxième extrémité fraisée de façon à obtenir au moins un deuxième moyen d'assemblage (6) comprenant une deuxième protubérance sur un deuxième bord (2) dudit élément présentant au moins une première partie (17) comprenant un point central (19), la première partie (17) présentant une surface tangentielle (T₁₇) audit point central (19) formant un angle β avec ladite surface supérieure (S) de l'élément compris dans une plage allant de 1 à 90°, en particulier entre 30° et 60° et de préférence de l'ordre de 45°.

16. Procédé selon l'une des revendications 13 à 15, dans lequel le fraisage est réalisé au moyen d'une fraiseuse (88) se déplaçant conjointement avec le profilé (80) dans la direction d'extrusion (E) et décrivant, dans ladite direction perpendiculaire (F) à ladite direction d'extrusion (E), et à partir de ladite surface inférieure (i) dudit élément une première trajectoire sensiblement ascendante, une deuxième trajectoire sensiblement horizontale et ensuite une troisième trajectoire sensiblement descendante.

17. Procédé selon la revendication 16, dans lequel la distance parcourue par la fraiseuse (88) lors de ladite deuxième trajectoire sensiblement horizontale est inférieure à une largeur dudit élément.

18. Procédé selon l'une des revendications 16 et 17, dans lequel une trajectoire formée de ladite première trajectoire, ladite deuxième trajectoire et ladite troisième trajectoire est une trajectoire sensiblement elliptique.

19. Procédé selon l'une quelconque des revendications 13 à 18, dans lequel, lors d'au moins une desdites étapes de formage, au moins une desdites protubérance est formée de telle façon qu'elle présente une troisième partie (11,20), entre ladite extrémité libre (13,15) et ladite première partie (10,17).

20. Procédé selon l'une quelconque des revendications 13 à 19, dans lequel, lors d'au moins une desdites étapes de formage, au moins une desdites protubérance est formée de telle façon qu'elle présente une deuxième partie (9,18), entre ladite extrémité liée (12,16) et ladite première partie (10,17).

## Revendications modifiées

### Revendications modifiées conformément à la règle 86(2) CBE.

**1.** Elément profilé, appelé premier élément, prévu pour être assemblé avec au moins un deuxième élément et un troisième élément sensiblement identiques, pour recouvrir une surface substantiellement plane comprenant:
■ au moins une surface supérieure (S) et une surface inférieure (i),
■ un premier bord (1) muni d'un premier moyen d'assemblage (5) et un deuxième bord (2), parallèle audit premier bord (1), muni d'un deuxième moyen d'assemblage, ledit premier moyen d'assemblage (5) du premier bord (1) étant muni d'au moins une première protubérance présentant une extrémité libre (13) et une extrémité liée (12) à ladite surface supérieure (S) dudit premier élément (I), ladite première protubérance s'étendant à partir de l'extrémité liée (12), à l'opposé dudit premier élément (I), et comprenant au moins une première partie (10) inclinée,
■ un troisième bord (3) muni d'un premier moyen de couplage (7) et un quatrième bord (4) parallèle audit troisième bord (3), muni d'un deuxième moyen de couplage (8), ledit premier moyen de couplage (7) et le dit deuxième moyen de couplage (8) étant complémentaires l'un de l'autre,
■ ledit premier élément (I) étant prévu pour être agencé de manière adjacente audit deuxième élément (II) de sorte que le premier moyen de couplage (7) du troisième bord (3) du premier élément (I) soit couplé au deuxième moyen de couplage (8) du quatrième bord (4) du deuxième élément (II),
■ ledit premier élément (I) étant prévu pour être agencé de manière adjacente audit troisième élément (III) de sorte que le deuxième moyen d'assemblage (6) du premier élément (I) soit en contact avec au moins un point de ladite première protubérance dudit troisième élément (III),
**caractérisé en ce que** ladite première protubérance comprend en outre entre l'extrémité libre (13) et la première partie (10), une troisième partie (11) substantiellement plane, essentiellement parallèle à ladite surface supérieure (S) dudit élément et **en ce que** ledit contact entre la première protubérance dudit troisième élément et ledit deuxième moyen d'assemblage (6) dudit premier élément se fait en dessous ou au-dessus de ladite surface supérieure (S) dudit premier élément lorsque celui-ci est agencé de manière adjacente audit troisième élément, ledit contact étant déplaçable le long de ladite troisième partie.

**2.** Elément profilé selon la revendication 1, dans lequel ledit deuxième moyen d'assemblage (6) du deuxième bord (2) dudit élément profilé (I) comprend au moins une deuxième protubérance présentant une extrémité libre (15) et une extrémité liée (16) à ladite surface supérieure (S) dudit élément profilé (I), ladite deuxième protubérance s'étendant à partir de l'extrémité liée (16) à l'opposé dudit élément (I) et présentant au moins une première partie (17) inclinée, et dans lequel au moins un point, de ladite première protubérance dudit troisième élément (III) est en contact avec ladite deuxième protubérance dudit premier élément (I) lorsque lesdits premier (I) et troisième éléments (III) sont agencés de manière adjacente l'un à l'autre.

**3.** Elément profilé selon la revendication 1 ou 2, dans lequel la dite première partie inclinée (10,17) comprend un point central (14, 19), et dans lequel la première partie (10,17) présente une surface tangentielle (T₁₀, T₁₇₎) audit point central (14,19) formant un angle (α, β) avec ladite surface supérieure (S) dudit élément (I) compris dans une plage allant de 1 à 90°, en particulier entre 30° et 60° et de préférence de l'ordre de 45°.

**4.** Elément profilé selon l'une quelconque des revendications 1 à 3, dans lequel ledit deuxième moyen d'assemblage (6) comprend une rainure (22) en retrait par rapport à une extrémité dudit deuxième bord (2), ladite rainure (22) en retrait étant prévue pour loger au moins une partie de ladite première protubérance dudit premier bord 1 lorsque ledit premier élément (I) est agencé de manière adjacente au troisième élément (III).

**5.** Elément profilé selon l'une quelconque des revendications précédentes, dans lequel ladite première partie (10,17) d'au moins une desdites protubérances est une partie plane, une partie courbe concave ou convexe ou une combinaison de ceux-ci.

**6.** Elément profilé selon l'une quelconque des revendications précédentes, dans lequel une desdites protubérances comprend en outre entre l'extrémité liée (12,16) et ladite première partie (10,17), une deuxième partie (9,18) substantiellement plane en prolongement de ladite surface supérieure (S) dudit élément profilé (I).

**7.** Elément profilé selon l'une quelconque des revendications 2 à 6, dans lequel ladite deuxième protubérance comprend en outre entre l'extrémité libre (15) et la première partie (17), une troisième partie (20) substantiellement plane, essentiellement parallèle à ladite surface supérieure dudit élément.

**8.** Elément profilé selon l'une quelconque des revendications 2 à 7, dans lequel l'angle α et l'angle β sont égaux en valeur relative.

**9.** Ensemble de profilés comprenant au moins un premier élément (I) selon l'une quelconque des revendications 1 à 8, un deuxième élément (II) et un troisième élément (III) sensiblement identique au premier élément (I).

**10.** Ensemble de profilés selon la revendication 9, comprenant en outre une première jonction (J) lorsque ledit troisième bord (3) du premier élément (I) est couplé au quatrième bord (4) du deuxième élément (II), ladite première jonction (J) présentant une première section transversale.

**11.** Ensemble de profilés selon la revendication 9 ou 10, comprenant en outre une deuxième jonction (J') lorsque le deuxième bord (2) du premier élément (I) est en contact avec le premier bord (1) du troisième élément (III), ladite deuxième jonction (J') présentant une deuxième section transversale.

**12.** Ensemble de profilés selon les revendications 10 et 11, dans lequel ladite première section transversale et ladite deuxième section transversale présentent une géométrie similaire, en particulier identique, l'une à l'autre.

**13.** Ensemble de profilés selon les revendications 10 et 11 ou 12, dans lequel ladite première section transversale présente une hauteur h1, ladite deuxième section transversale présente une hauteur h2, et ladite hauteur h1 est essentiellement identique à la hauteur h2.

**14.** Procédé de fabrication de profilés **caractérisé en ce qu'**il comprend:
■ une extrusion dans une direction d'extrusion d'un profilé continu (80) présentant une hauteur h, une surface supérieure (S) et une surface inférieure (i), ladite surface supérieure (S) présentant une épaisseur e,
■ une découpe dudit profilé continu (80) en éléments (89), chaque élément étant découpé à une longueur d'élément prédéterminée et présentant une première et une deuxième extrémité,
■ un fraisage, de préférence effectuée lors de la découpe, dans une direction perpendiculaire (F) à ladite direction d'extrusion (E), d'au moins ladite première extrémité de chaque élément sur une hauteur inférieure ou égale à ladite hauteur h diminuée de ladite épaisseur e à partir de la surface inférieure (i) et sur une distance prédéterminée dans ladite direction d'extrusion (E), et
■ un formage, dans ladite direction perpendiculaire (P) à ladite direction d'extrusion (E), de ladite première extrémité fraisée de façon à obtenir au moins un premier moyen d'assemblage (5) comprenant une première protubérance sur un premier bord (1) dudit élément, laquelle protubérance comprenant une extrémité liée (12) et une extrémité libre (13) et présentant au moins une première partie (10) comprenant un point central (14), la première partie (10) présentant une surface tangentielle (T₁₀) audit point central (14) formant un angle α avec ladite surface supérieure (S) de l'élément compris dans une plage allant de 1 à 90°, en particulier entre 30° et 60° et de préférence de l'ordre de 45°.

**15.** Procédé selon la revendication 14 comprenant en outre une étape de rainurage, dans ladite direction perpendiculaire (P) à ladite direction d'extrusion (E), d'un deuxième bord (2) de façon à former un deuxième moyen d'assemblage (6) prévu pour loger ledit premier moyen d'assemblage (5).

**16.** Procédé selon la revendication 14 ou la revendication 15 comprenant en outre un fraisage de la deuxième extrémité de chaque élément sur une hauteur inférieure ou égale à ladite hauteur h diminuée de ladite épaisseur e à partir de la surface inférieure (i) et sur une largeur prédéterminée, dans une direction perpendiculaire (F) à ladite direction d'extrusion (E) et un formage, dans ladite direction perpendiculaire (P) à ladite direction d'extrusion (E), de ladite deuxième extrémité fraisée de façon à obtenir au moins un deuxième moyen d'assemblage (6) comprenant une deuxième protubérance sur un deuxième bord (2) dudit élément présentant au moins une première partie (17) comprenant un point central (19), la première partie (17) présentant une surface tangentielle (T₁₇) audit point central (19) formant un angle β avec ladite surface supérieure (S) de l'élément compris dans une plage allant de 1 à 90°, en particulier entre 30° et 60° et de préférence de l'ordre de 45°.

**17.** Procédé selon l'une des revendications 14 à 16, dans lequel le fraisage est réalisé au moyen d'une fraiseuse (88) se déplaçant conjointement avec le profilé (80) dans la direction d'extrusion (E) et décrivant, dans ladite direction perpendiculaire (F) à ladite direction d'extrusion (E), et à partir de ladite surface inférieure (i) dudit élément une première trajectoire sensiblement ascendante, une deuxième trajectoire sensiblement horizontale et ensuite une troisième trajectoire sensiblement descendante.

**18.** Procédé selon la revendication 17, dans lequel la distance parcourue par la fraiseuse (88) lors de ladite deuxième trajectoire sensiblement horizontale est inférieure à une largeur dudit élément.

**19.** Procédé selon l'une des revendications 17 et 18, dans lequel une trajectoire formée de ladite première trajectoire, ladite deuxième trajectoire et ladite troisième trajectoire est une trajectoire sensiblement elliptique.

**20.** Procédé selon l'une quelconque des revendications 14 à 19, dans lequel, lors d'au moins une desdites étapes de formage, au moins une desdites protubérance est formée de telle façon qu'elle présente une troisième partie (11,20), entre ladite extrémité libre (13,15) et ladite première partie (10,17).

**21.** Procédé selon l'une quelconque des revendications 14 à 20, dans lequel, lors d'au moins une desdites étapes de formage, au moins une desdites protubérance est formée de telle façon qu'elle présente une deuxième partie (9,18), entre ladite extrémité liée (12, 16) et ladite première partie (10, 17).
